# EUROPEAN PATENT APPLICATION

(11) **EP 4 391 722 A1**
(43) Date of publication of application: **26.06.2024**
(21) Application number: 21954329.5
(22) Date of filing: 06.09.2021
(51) Int. Cl.: H05B 6/12, H05B 6/06, H02M 7/44

(54) **INDUCTION HEATING TYPE COOKTOP**

(30) Priority: 17.08.2021 KR 20210108221
(71) Applicant: LG Electronics Inc., Yeongdeungpo-gu Seoul 07336 (KR); Industry-University Cooperation Foundation Hanyang University, Seoul 04763 (KR)
(72) Inventor: JUNG, Kyunghoon, Seoul 08592 (KR); KIM, Euisung, Seoul 08592 (KR); KIM, Yangkyeong, Seoul 08592 (KR); KIM, Raeyoung, Seoul 06281 (KR)
(74) Representative: Vossius & Partner Patentanwälte Rechtsanwälte mbB
(86) International application number: PCT/KR2021/012007
(87) International publication number: WO 2023/022283

(57) **Abstract**

The present disclosure is to provide an induction heating type cooktop that minimizes negative voltage formation and ringing in an inverter to which a Wide Band Gab (WBG) element is applied, and includes a top glass on which a cooking vessel is placed, and a cooking vessel for heating the cooking vessel. The induction heating type cooktop may include an inverter including a working coil that generates a magnetic field, at least one switching element driven to flow current in the working coil, and a driving part that drives the switching element, and the composite impedance of the driving part can be varied.

## Description

### BACKGROUND OF THE INVENTION

### 1. Field of the Invention

The present disclosure relates to an induction heating type cooktop.

### 2. Discussion of the Related Art

Various types of cooking appliances are used to heat food at home or in restaurants. In the past, gas stoves using gas as fuel have been widely used, but recently, devices that heat cooking vessels using electricity rather than gas are becoming popular.

Methods of heating objects using electricity are largely divided into resistance heating and induction heating. Resistance heating is a method of heating by transferring the heat generated when an electric current flows through a metal resistance wire or a non-metallic heating element such as silicon carbide to the cooking vessel through radiation or conduction. The induction heating method uses the magnetic field generated around the coil when high-frequency power of a certain size is applied to the coil to generate an eddy current in a cooking container made of metal, thereby heating the cooking container itself.

In the case of the induction heating type, the inverter applies high-frequency power to the coil. The inverter is driven by applying Zero Voltage Switching (ZVS) to reduce switching loss. Recently, High-frequency driving for the extent of types of objects that can be heated, increase of output, and reduction of product volume is required to reduce.

Meanwhile, Wide Band Gab (WBG) can be used as a switching element for high-frequency driving. In this case, a negative voltage is formed at the gate-source voltage due to a high voltage change rate and rapid change in parasitic components in the transient section during switching, it is affected a negative effect on the operation of (-) low-rated switching devices (for example, SiC devices).

Additionally, since ringing may occur in the gate-source voltage due to resonance between components and parasitic components of the PCB and switching elements, a stable driver is required.

### SUMMARY OF THE INVENTION

An object of the present disclosure is to provide an induction heating type cooktop that form negative voltage and minimizes ringing in an inverter to which a Wide Band Gab (WBG) element is applied.

### TECHNICAL SOLUTION

The induction heating type cooktop according to an embodiment of the present disclosure is to vary the composite impedance of the driving unit that drives the switching element.

The induction heating type cooktop according to an embodiment of the present disclosure is to reduce the composite impedance of the driver in the switching transient section of the switching device, and increase the composite impedance of the driver when the drain-source voltage of the switching device falls and returns to the diode.

An induction heating type cooktop may include a top glass on which a cooking vessel is placed, a working coil configured to generate a magnetic field for heating the cooking vessel, and an inverter. The inverter may include at least one switching element configured to be driven to flow current to the working coil, and a driving unit configured to drive the switching element, wherein the composite impedance of the driver is variable.

The driving part is configured to reduce the composite impedance in the switching transient section of the switching element, and increase the composite impedance when the drain-source voltage of the switching element falls and returns to the diode.

The induction heating type cooktop of claim 1, wherein the driving part includes first to third impedance forming units for adjusting the composite impedance of the driving unit.

The third composite impedance formed by the third impedance forming unit is greater than the first composite impedance formed by the first impedance forming unit, and wherein the first composite impedance is greater than the second composite impedance formed by the second impedance forming unit.

The first impedance forming unit may include a first gate resistor, a first switch configured to selectively connect the first gate resistance to a gate internal resistance of the switching element, and a first switch power supply unit configured to control the first switch to operate.

The second impedance forming unit includes a second gate resistor, and wherein the first gate resistance is smaller than the second gate resistance.

The third impedance forming unit may include a second diode connected to the gate internal resistance of the switching element, a second switch connected to the second diode, and a second switch power unit configured to control the second switch to operate.

When the gate of the switching element is turned off, the first impedance forming unit is configured to form the composite impedance.

The third impedance forming unit is configured to form the composite impedance in a switching transient section of the switching element.

When the drain-source voltage of the switching element falls and returns to the diode, the second impedance forming unit is configured to form the composite impedance.

### EFFECTS OF THE INVENTION

According to an embodiment of the present disclosure, increasing a size of a negative voltage is minimized and an occurrence of a ringing phenomenon is minimized, thereby improving a stability of an inverter operation.

According to an embodiment of the present disclosure, there is an advantage in that a structure in which a composite impedance of a driving unit can be varied is simplified and an increase in volume size is minimized.

According to an embodiment of the present disclosure, there is an advantage in that a cooktop using a WBG element can be stably driven at a high frequency.

### BRIEF DESCRIPTION OF THE DRAWINGS

Figure 1 is a perspective view illustrating a cooktop and a cooking vessel according to an embodiment of the present disclosure.
Figure 2 is a cross-sectional view of the cooktop and the cooking vessel according to an embodiment of the present disclosure.
Figure 3 is a diagram illustrating a circuit diagram of the cooktop according to an embodiment of the present disclosure.
Figure 4 is a diagram illustrating output characteristics of the cooktop according to an embodiment of the present disclosure.
Figure 5 is a circuit diagram illustrating an existing structure of the switching element and the driving unit.
Figure 6 is a circuit diagram illustrating a switching element and a driving unit of an inverter according to an embodiment of the present disclosure.
Figure 7 is a graph illustrating voltage changes in the components of the switching device and the voltage of the driver that drives the components of the switching device during one cycle of the switching device according to an embodiment of the present disclosure
Figure 8 is a circuit diagram illustrating the operation of the switching element and driving unit of the inverter in the first mode according to an embodiment of the present disclosure.
Figure 9 is a circuit diagram illustrating the operation of the switching element and driving unit of the inverter in the second mode according to an embodiment of the present disclosure.
Figure 10 is a circuit diagram illustrating the operation of the switching element of the inverter and the driving unit in a third mode according to an embodiment of the present disclosure.
Figure 11 is a diagram illustrating a voltage waveform of a gate-source terminal in a switching device according to an embodiment of the present disclosure.

### DETAILED DESCRIPTION OF THE PREFERRED EMBODIMENTS

Hereinafter, embodiments of the present disclosure will be described in detail with reference to the drawings. The suffixes "module" and "unit or portion" for components used in the following description are merely provided only for facilitation of preparing this specification, and thus they are not granted a specific meaning or function.

Hereinafter, an induction heating type cooktop and operating method the same according to an embodiment of the present disclosure will be described. For convenience of explanation, "induction heating type cooktop" is referred to as "cooktop."

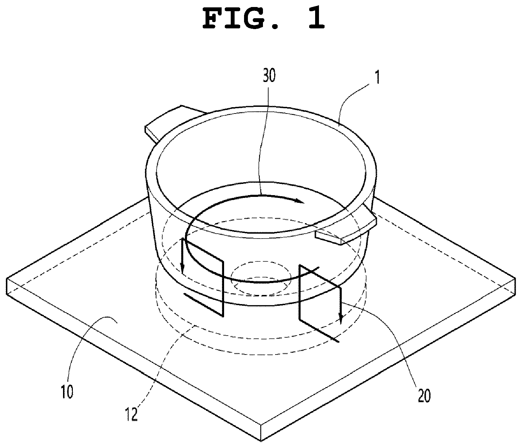

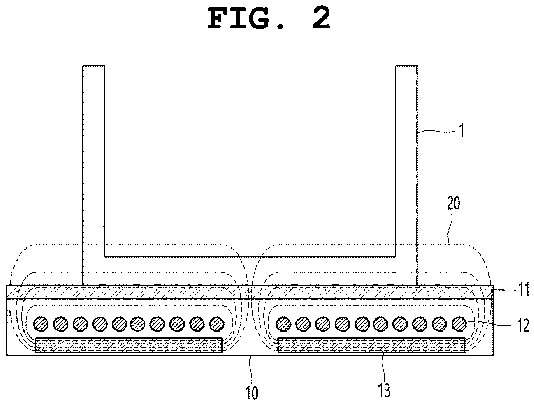

Figure 1 is a perspective view illustrating a cooktop and a cooking vessel according to an embodiment of the present disclosure, and Figure 2 is a cross-sectional view of the cooktop and the cooking vessel according to an embodiment of the present disclosure.

The cooking vessel 1 may be located at the top of the cooktop 10, and the cooktop 10 may heat the cooking vessel 1 located at the top.

First, a method by which the cooktop 10 heats the cooking vessel 1 will be described.

As shown in FIG. 1, the cooktop 10 may generate a magnetic field 20 such that at least a portion thereof passes through the cooking vessel 1. In this case, if the material of the cooking vessel 1 contains an electrical resistance component, the magnetic field 20 may induce an eddy current 30 in the cooking vessel 1. This eddy current 30 may generate heat in the cooking vessel 1 itself. And, this heat may be conducted or radiated to an inside of the cooking vessel 1, so that the contents of the cooking vessel 1 can be cooked.

On the other hand, if the material of the cooking vessel 1 does not contain the electrical resistance component, the eddy current 30 does not occur. Therefore, in this case, the cooktop 10 cannot heat the cooking vessel 1.

Accordingly, the cooking vessel 1 that can be heated by the cooktop 10 may be a stainless steel vessel or a metal vessel such as an enamel or cast iron vessel.

Next, a method by which the cooktop 10 generates the magnetic field 20 will be described.

As shown in FIG. 2, the cooktop 10 may include at least one of a top glass 11, a working coil 12, and a ferrite core 13.

The top glass 11 can support the cooking vessel 1. For that, the cooking vessel 1 can be placed on the upper surface of the top glass 11. A heating area in which the cooking vessel 1 is heated may be formed in the top glass 11.

Additionally, the top glass 11 may be formed of tempered glass made of ceramic material synthesized from various minerals. Accordingly, the top glass 11 can protect the cooktop 10 from external shocks, etc.

Additionally, the top glass 11 can prevent foreign substances such as dust from entering the cooktop 10.

The working coil 12 may be located below the top glass 11. This working coil 12 may or may not be supplied with current to generate the magnetic field 20. Specifically, current may or may not flow in the working coil 12 depending on whether an internal switching element of the cooktop 10 is turned on or off.

When current flows through the working coil 12, a magnetic field 20 is generated. The magnetic field 20 may meet the electrical resistance component contained in the cooking vessel 1 to generate an eddy current 30. The eddy current heats the cooking vessel 1, so that the contents of the cooking vessel 1 can be cooked.

Additionally, a heating power of the cooktop 10 can be adjusted depending on an amount of current flowing through the working coil 12. As a specific example, the greater the current flowing through the working coil 12, the greater the magnetic field 20 is generated. As a result, the magnetic field 20 passing through the cooking vessel 1 increases, thereby increasing the heating power of the cooktop 10.

The ferrite core 13 is a component that protects an internal circuit of the cooktop 10. Specifically, the ferrite core 13 may serve as a shield to block an influence of the magnetic field 20, generated by the working coil 12 or an externally generated electromagnetic field, on the internal circuit of the cooktop 10.

To this end, the ferrite core 13 may be formed of a material with very high permeability. The ferrite core 13 may serve to guide the magnetic field flowing into the cooktop 10 to flow through the ferrite core 13 rather than being radiated. The movement of the magnetic field 20 generated in the working coil 12 by the ferrite core 13 may be as shown in FIG. 2.

Meanwhile, the cooktop 10 may further include other components in addition to the top glass 11, working coil 12, and ferrite core 13 described above. For example, the cooktop 10 may further include an insulating material (not shown) located between the top glass 11 and the working coil 12. That is, the cooktop according to the present disclosure is not limited to the cooktop 10 shown in FIG. 2.

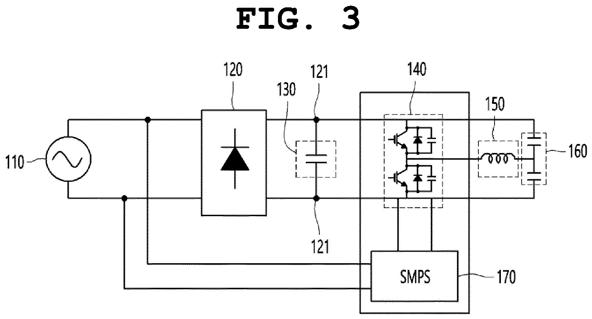

Figure 3 is a diagram illustrating a circuit diagram of the cooktop according to an embodiment of the present disclosure.

Since the circuit diagram of the cooktop 10 shown in FIG. 3 is merely an example for convenience of explanation, the present disclosure is not limited thereto.

Referring to FIG. 3, the induction heating type cooktop may include at least part or all of a power supplier 110, a rectifier 120, a direct current (DC) link capacitor 130, an inverter 140, the working coil 12, a resonance capacitor 160, and a Switching Mode Power Supply (SMPS) 170.

The power supplier 110 can receive an external power input. The external power input may be alternation current (AC) power.

The power supplier 110 may supply AC voltage to the rectifier unit 120.

The rectifier 120 may be an electrical device for converting AC to DC. The rectifier 120 may convert AC voltage supplied through the power supplier 110 into DC voltage. The rectifier 120 may supply the converted voltage to DC ends 121.

The output terminal of the rectifier 120 may be connected to DC ends 121. The DC ends 121 may output through the rectifier 120 can be referred to as a DC link. The voltage measured at both ends of DC 121 may be also referred to as a DC link voltage.

The DC link capacitor 130 may serve as a buffer between the power supplier 110 and the inverter 140. Specifically, the DC link capacitor 130 is used to maintain the DC link voltage converted through the rectifier 120 and supply it to the inverter 140.

The inverter 140 may serve to switch the voltage applied to the working coil 12 so that a high-frequency current flows in the working coil 12. The inverter 140 may include a semiconductor switch. The semiconductor switch may be an Insulated Gate Bipolar Transistor (IGBT) or a Wide Band Gab (WBG) device, but this is only an example and is not limited thereto. Meanwhile, the WBG device may be made of SiC (Silicon Carbide) or GaN (Gallium Nitride). The inverter 140 drives the semiconductor switch to cause a high-frequency current to flow in the working coil 12, thereby forming a high-frequency magnetic field in the working coil 12.

Current may or may not flow in the working coil 12 depending on whether the switching element is driven. When current flows through the working coil 12, a magnetic field is generated. The working coil 12 can heat the cooking appliance by generating a magnetic field as current flows.

One side of the working coil 12 may be connected to a connection point of a switching element of the inverter 140, and the other side of that may be connected to the resonance capacitor 160.

The switching element may be driven by a driving unit (not shown), and is controlled by the switching time output from the driving unit, so that the switching elements can operate alternately and apply a high-frequency voltage to the working coil 12. Since the on/off time of the switching element applied from the driving unit (not shown) is controlled in a gradually compensated manner, the voltage supplied to the working coil 12 may be changed from a low voltage to a high voltage.

The resonance capacitor 160 may be a component that functions as a buffer. The resonant capacitor 160 may control a saturation voltage rise rate during turn-off of the switching element, thereby affecting energy loss during that time.

The SMPS 170 may refer to a power supply device that efficiently converts power according to switching operations. The SMPS 170 may convert the DC input voltage into a square wave voltage and then obtain a controlled DC output voltage through a filter. The SMPS 170 can minimize unnecessary losses by controlling the flow of power using a switching processor.

In the case of the cooktop 10 configured with the circuit diagram shown in FIG. 3, the resonance frequency may be determined by an inductance value of the working coil 12 and a capacitance value of the resonance capacitor 160. Then, a resonance curve is formed around the determined resonance frequency. The resonance curve can represent an output power of the cooktop 10 according to the frequency bandwidth.

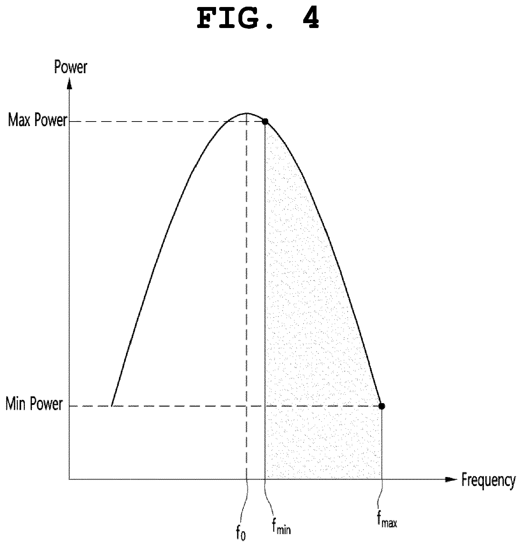

Next, Figure 4 is a diagram illustrating output characteristics of the cooktop according to an embodiment of the present disclosure.

First, the quality (Q) factor (quality factor) may be a value indicating the sharpness of resonance in a resonant circuit. Accordingly, in the case of the cooktop 10, the Q factor may be determined by the inductance value of the working coil 12 and the capacitance value of the resonance capacitor 160 included in the cooktop 10. The resonance curve is different in accordance with the Q factor. Accordingly, the cooktop 10 may have different output characteristics in accordance with the inductance value of the working coil 12 and the capacitance value of the resonance capacitor 160.

Figure 4 illustrates an example of a resonance curve according to Q factor. In general, the larger the Q factor, the sharper the shape of the curve, and the smaller the Q factor, the broader the shape of the curve.

The horizontal axis of the resonance curve may represent frequency, and the vertical axis may represent output power. The frequency that outputs maximum power in the resonance curve is called a resonance frequency (f₀).

In general, the cooktop 10 may use the frequency in the right area based on the resonance frequency (f₀) of the resonance curve. Additionally, the cooktop 1 may have a minimum and maximum operating frequency set in advance.

As an example, the cooktop 10 may operate at a frequency ranging from the maximum operating frequency (fₘₐₓ) to the minimum operating frequency (fₘᵢₙ). In other words, the operating frequency range of the cooktop 10 may be from the maximum operating frequency (fₘₐₓ) to the minimum operating frequency (fₘᵢₙ).

As an example, the maximum operating frequency (fₘₐₓ) may be a IGBT maximum switching frequency. The IGBT maximum switching frequency may refer to the maximum frequency that can be driven, considering the breakdown voltage and capacity of the IGBT switching element. For example, the maximum operating frequency (fₘₐₓ) may be 75 kHz.

The minimum operating frequency (fₘᵢₙ) may be approximately 20 kHz. In this case, since the cooktop 10 does not operate at audible frequencies (approximately 16Hz to 20kHz), a noise from the cooktop 10 can be reduced.

Meanwhile, the setting values of the maximum operating frequency (fₘₐₓ) and the minimum operating frequency (fₘᵢₙ) described above are only examples and are not limited thereto.

When the cooktop 10 receives a heating command, the operating frequency according to the heating power level set in the heating command can be determined. Specifically, the cooktop 10 can adjust the output power by lowering the operating frequency as the set heating power level becomes higher and increasing the operating frequency as the set heating power level becomes lower. In other words, when the cooktop 10 receives a heating command, a heating mode that operates in any one of the operating frequency ranges according to the set heating power can be implemented.

Meanwhile, the cooktop 10 may apply and operate Zero Voltage Switching (ZVS) to reduce switching losses. In addition, the cooktop 10 has recently expanded types of the cooking vessel 1 that can be heated, and high-frequency driving for high output and reduced product size has been required. Accordingly, the cooktop 10 may be equipped with a WBG element, thereby being driven at a high frequency.

On the other hand, when the cooktop 10 is driven at a high frequency, a negative voltage can be formed at the gate-source voltage due to the high voltage change rate (dv/dt) and rapid change in parasitic components in a transient section during switching. The formed negative voltage can be a detrimental effect on the operation of (-) low-rated WBG devices, especially SiC devices. Specifically, for IGBT devices, the allowable gate-source voltage (Vgs) is -20 to +20V, but for SiC devices, the allowable gate-source voltage (Vgs) is -10 to +20V. Since the (-) rating of SiC devices is low a reduction of the negative voltage may be required.

Additionally, when using the WBG device, ringing may occur in the gate-source voltage due to a resonance phenomenon between parasitic components of the WBG device and elements. Specifically, as the drain-source voltage (Vds) all decreases and reflux to the diode begins, a resonance phenomenon may be induced between the parasitic inductance of the PCB and the snubber capacitor. From that, since ringing occurs at the gate-source terminal, measures to reduce the ringing phenomenon may be required.

Accordingly, the present disclosure is to improve a stability of inverter operation by providing a cooktop 10 including a gate driving circuit that provides an impedance path for reducing negative voltage and ringing in the inverter 140 to which a WBG element is applied.

In order to improve a trade-off relationship between negative voltage and ringing according to gate resistance, the present disclosure may make the gate resistance small when forming a negative voltage and make the gate resistance large in the section where ringing occurs, thereby providing stable stability.

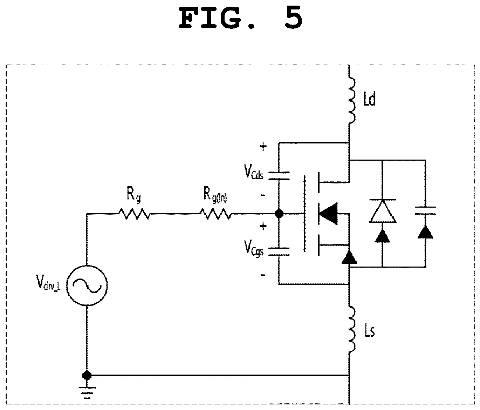

Figure 5 is a circuit diagram illustrating an existing structure of the switching element and the driving unit.

The inverter 140 of the cooktop may include at least one switching element. For a specific example, a half-bridge type inverter 140 may have two switching elements, and a full-bridge type inverter 140 may have four switching elements. In this disclosure, it is assumed that the inverter 140 is the half-bridge type.

Figure 5 illustrates one of the switching elements consisting of the half-bridge type inverter 140 and a circuit of the driver for driving the one of those, and the parasitic effect of each element is also shown.

The driving unit is connected to the switching element so that the on and off of the gate is controlled. The driving unit may include a power supply unit (V_{drv_L}) for applying a signal to the gate of the switching element. The power supply may apply a signal to turn on the gate to the switching element.

Meanwhile, referring to FIG. 5, since the composite impedance of the driving unit is fixed a negative voltage may be formed when the gate of the switching element is turned off, or a ringing may occur at the gate-source terminal when the drain-source voltages all fall and return to the diode.

Accordingly, the present disclosure is to provide a driving unit that changes the impedance path to minimize the formation of negative voltage and the occurrence of ringing phenomenon.

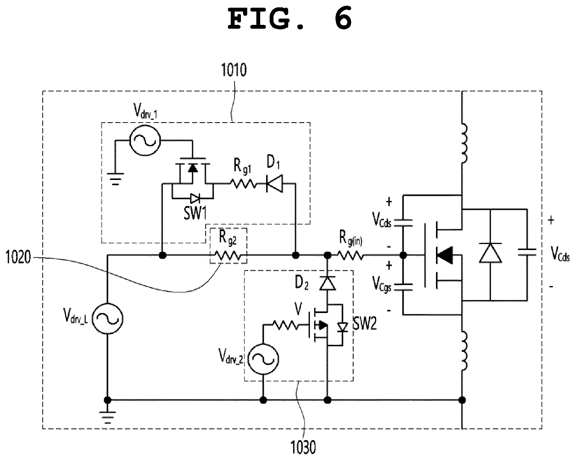

Figure 6 is a circuit diagram illustrating a switching element and a driving unit of an inverter according to an embodiment of the present disclosure.

A driving unit for driving the switching element of the inverter 140 according to an embodiment of the present disclosure may be connected to the switching element. The driving unit may be implemented as a gate driving circuit that controls on and off of the gate of the switching element.

In other words, the inverter 140 may include at least one switching element driven to flow current to the working coil 12 and a driving unit that drives the switching element, and the composite impedance of the driving unit can be varied.

The driving unit may include a first impedance forming unit 1010, a second impedance forming unit 1020, a third impedance forming unit 1030, and a power supply unit V_{drv_L}.

Each of the second impedance forming unit 1020 and the power supply unit V_{drv_L} may correspond to R_{g} and the power supply unit V_{drv_L} shown in FIG. 5.

The first impedance forming unit 1010 may form a composite impedance of the driving unit when the gate is turned off. The first impedance forming unit 1010 may include a first gate resistor R_{g1}, a first switch SW1 that selectively connects the first gate resistor R_{g1} to the gate internal resistance R_{g(in)} of the switching element, and a first switch power supply unit V_{drv_1} that controls the first switch SW1.

That is, the first impedance forming unit 1010 may form a composite impedance when the gate of the switching device is turned off, and thus the first gate resistance R_{g1} and the gate internal resistance R_{g(in)} of the switching element can be connected.

The first impedance forming unit 1010 may operate when a quick turn-off of the gate is required to reduce switching loss of the switching element.

The first impedance forming unit 1010 may include at least part or all of a first gate resistor R_{g1} connected to the gate internal resistance R_{g(in)}, a first diode D₁, a first switch SW1, and a first switch power supply unit V_{drv_1}.

The first gate resistance R_{g1} may be smaller than the second gate resistance R_{g2}, which will be described later. The first gate resistor R_{g1} may be selectively connected to the gate internal resistance R_{g(in)}. The first gate resistor R_{g1} may be connected in series with the gate internal resistance R_{g(in)} in accordance with whether the first switch SW1 is turned on or off. The first gate resistor R_{g1} may be connected between the first diode D₁ and the first switch SW1.

The first diode D₁ may be connected between the first gate resistor R_{g1} and the first switch SW1. One end of the first diode D₁ may be connected to the first gate resistor R_{g1}, and the other end of that may be connected to a contact point between the second gate resistor R_{g2} and the gate internal resistance R_{g(in)}.

The first diode D₁ may separate resistance depending on gate on/off.

The first switch SW1 may be turned on or off depending on whether power is supplied from the first switch power supply unit V_{drv_1}. One end of the first switch SW1 may be connected to the first gate resistor R_{g1}, and the other end of that may be connected to a contact point between the second gate resistor R_{g2} and the power supply unit V_{drv_L}.

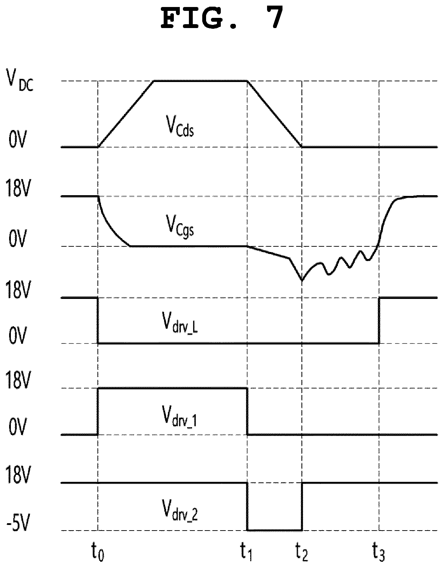

The first switch power supply unit V_{drv_1} can control the first switch SW1. The first switch power supply unit V_{drv_1} may control the first switch SW1 to be turned on at time t₀ of FIG. 7, which will be described later, and control the first switch SW1 to be off at time t₁ of FIG. 7. The first gate resistor R_{g1} may form the composite impedance of the driving unit from time t₀ to time t₁.

The second impedance forming unit 1020 may form a composite impedance of the driving unit in the ringing forming section.

The second impedance forming part 1020 may include a second gate resistance R_{g2}, and the first gate resistance R_{g1} may be smaller than the second gate resistance R_{g2}. One end of the second gate resistor R_{g2} may be connected to the contact point of the first diode D₁ and the gate internal resistance R_{g(in)}, and the other end of that may be connected to the contact point of the first switch SW1 and the power supply unit V_{drv_L}.

The second gate resistor R_{g2} may form a composite impedance of the driving unit when both the first switch SW1 and the second switch SW2 are turned off. That is, when both the first switch SW1 and the second switch SW2 are turned off, the second gate resistance R_{g2} may be connected to the gate internal resistance R_{g(in)} of the switching element.

The second gate resistor R_{g2} may form an impedance from time t₂ to time t₃ in FIG. 7, which will be described later.

The third impedance forming unit 1030 may form the composite impedance of the driving unit in the negative voltage forming section. The third impedance forming unit 1030 can minimize the composite impedance of the driving unit. The third impedance forming unit 1030 may include a second diode D₂ connected to the gate internal resistance R_{g(in)} of the switching element, a second switch SW2 connected to the second diode D₂, and a second switch power unit V_{drv_2} that controls the switch SW2.

Specifically, when the third impedance forming unit 1030 is driven, the composite impedance may be formed only by the gate internal resistance R_{g(in)}.

The third impedance forming unit 1030 may include at least part or all of the second diode D₂, the second switch SW2, and the second switch power supply unit V_{drv_2}.

The third impedance forming part 1030 may be connected in parallel to each of the first gate resistor R_{g1} and the second gate resistor R_{g2}.

Also, the second diode D₂ and the second switch SW2 may be connected in series.

One end of the second diode D₂ may be connected to the gate internal resistance R_{g(in)}. More specifically, one end of the second diode D₂ may be connected to a contact point of the gate internal resistance R_{g(in)}, the first diode D₁, and the second gate resistor R_{g2}. The other end of the second diode D₂ may be connected to the second switch SW2.

The drain of the second switch SW2 may be connected to the second diode D₂, the gate of that may be connected to the second switch power supply unit V_{drv_2}, and the source of that may be connected to the ground. One end of the second switch power supply unit V_{drv_2} may be connected to the second switch SW2 and the other end of that connected to the ground. The resistance between the second switch power supply unit V_{drv_2} and the second switch SW2 shown in FIG. 6 may be the internal resistance of the gate of the second switch SW2.

Next, a method of operating the inverter will be described based on the voltage of the switching element and the driving unit that drives it during one cycle shown in FIG. 7.

Figure 7 is a graph illustrating voltage changes in the components of the switching device and the voltage of the driver that drives the components of the switching device during one cycle of the switching device according to an embodiment of the present disclosure.

FIG. may be a voltage change for the lower switching element assuming that the inverter 140 of the cooktop is a half-bridge type, but this is an example and is not limited thereto.

In FIG. 7, the section from t₀ to t₁ (first mode) may be a section in which the switching element is turned off. To reduce switching loss, rapid turn-off of the switching element is required. Accordingly, the first impedance forming unit 1010 may form a composite impedance of the driving unit to increase the switching speed. That is, in the first mode, the first switch SW1 may be turned on and the second switch element SW2 may be turned off.

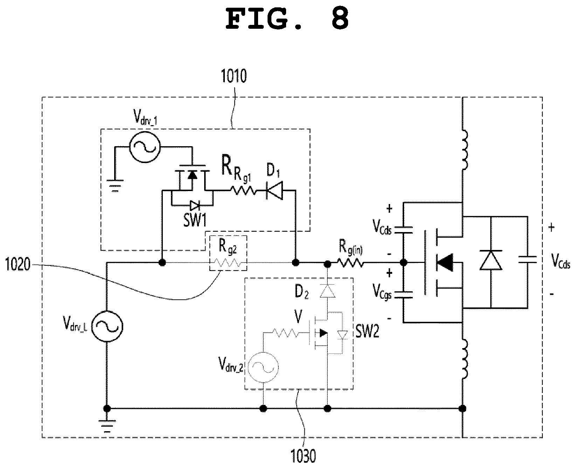

Figure 8 is a circuit diagram illustrating the operation of the switching element and driving unit of the inverter in the first mode according to an embodiment of the present disclosure.

Referring to FIG. 8, when the gate of the switching element is turned off, the first impedance forming unit 1010 may form a composite impedance.

That is, the first impedance forming unit 1010 can form the composite impedance of the driving unit. That is, both the gate internal resistance R_{g(in)} and the first gate resistance R_{g1} may be connected.

When the composite impedance is the first impedance in the section from t₀ to t₁, the first impedance may be the first gate resistance R_{g1}.

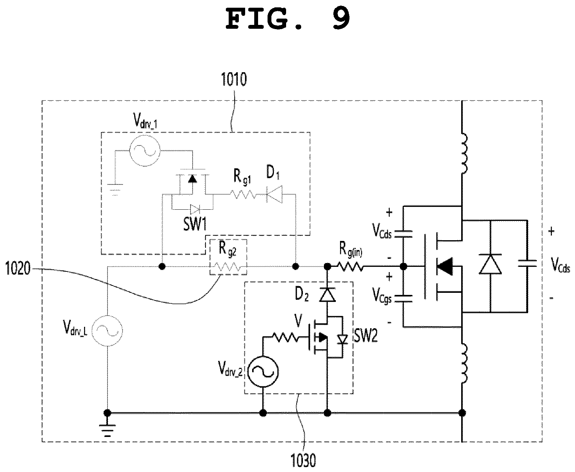

Figure 9 is a circuit diagram illustrating the operation of the switching element and driving unit of the inverter in the second mode according to an embodiment of the present disclosure.

The section from t₁ to t₂ (second mode) may be a switching transient section. That is, the switching transient section may be a section where the gate of another switching element begins to turn off. This section is a section in which a negative voltage can be formed, and the formation of the negative voltage can be minimized by forming an impedance smaller than the first impedance. Accordingly, in the second mode, the first switch SW1 may be turned off and the second switch element SW2 may be turned on. That is, the third impedance forming unit 1030 may form a composite impedance in the switching transient section of the switching element. Accordingly, the composite impedance of the driving unit can be minimized.

When the composite impedance in the section from t₁ to t₂ is the second impedance, the second impedance may be close to '0'. Accordingly, the second impedance may be smaller than the first impedance.

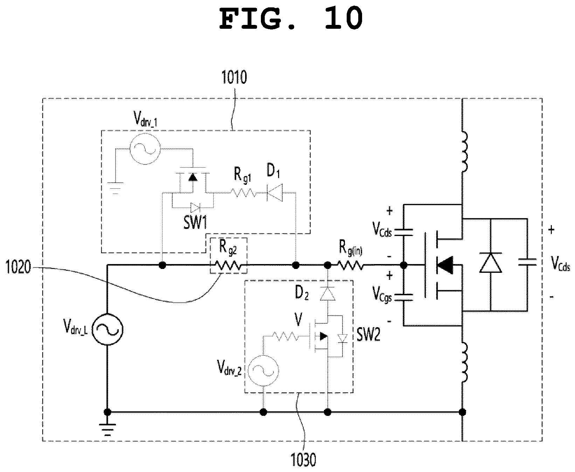

Figure 10 is a circuit diagram illustrating the operation of the switching element of the inverter and the driving unit in a third mode according to an embodiment of the present disclosure.

The section from t₂ to t₃ (a third mode) may be a section where feedback to the diode begins after all drain-source voltages drop. That is, this section is a dead time section after the drain-source voltage becomes 0V, and is a section in which ringing can occur. Therefore, the occurrence of ringing can be minimized by forming a relatively large impedance. Accordingly, in the third mode, the first switch SW1 may be turned off and the second switch element SW2 may also be turned off. Accordingly, the second impedance forming unit 1020, that is, the second gate voltage R_{g2}, may form the composite impedance of the driving unit. That is, when the drain-source voltage of the switching element falls and then returns to the diode, the second impedance forming unit 1020 can form a composite impedance.

When the composite impedance in the section from t₂ to t₃ is referred to as the third impedance, the third impedance may be the second gate resistance R_{g2}. Meanwhile, since the second gate resistance R_{g2} is greater than the first gate resistance R_{g1}, the third impedance may be greater than the first impedance. Accordingly, since a relatively large impedance is formed in the third mode the ringing phenomenon can be reduced.

In summary, the driving unit of the switching element can reduce the composite impedance in the switching transient section and increase the composite impedance when the drain-source voltage of the switching element falls and returns to the diode. For this, the driving unit may include the first to third impedance forming units 1010, 1020, and 1030 for adjusting the composite impedance of the driving unit, and the third composite impedance formed by the third impedance forming unit 1030 is greater than the first composite impedance formed by the first impedance forming portion 1010, and the first composite impedance 1010 may be greater than the second composite impedance formed by the second impedance forming portion 1020.

In the composite impedance, the third impedance may be the largest and the second impedance may be the smallest. That is, in case the composite impedance is listed in order of size, it may be the third impedance, the first impedance, and the second impedance.

As described above, according to the embodiment of the present disclosure, the cooktop 10 can flexibly adjust the composite impedance of the driving unit, thereby lowering the composite impedance in the switching transient section and increasing the composite impedance due to the reduction of the drain-source voltage in the diode reflux start section. Accordingly, there is an advantage in minimizing negative voltage and the occurrence of ringing phenomenon. By minimizing the formation of negative voltage, the operational reliability of the cooktop 10 using the WBG element driven at a high frequency is secured, and the occurrence of ringing phenomenon is minimized, thereby improving the Rds (on) and loss of the element.

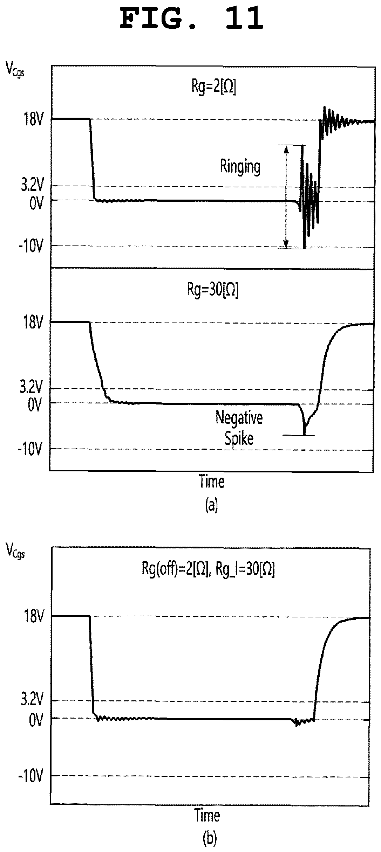

Figure 11 is a diagram illustrating a voltage waveform of a gate-source terminal in a switching device according to an embodiment of the present disclosure.

FIG. 11(a) may illustrate the voltage waveform of the gate source terminal when the composite impedance of the driving unit is fixed. In particular, FIG. 11(a) may illustrate the voltage waveform of the gate source terminal when the gate resistance is 2Ω and 30Ω, respectively.

It can be seen that when the gate resistance is 2Ω, i.e., relatively small, a ringing phenomenon may occur. Also, it can be seen that when the gate resistance is 30Ω, i.e., relatively large, a large negative voltage may be formed.

On the other side, FIG. 11(b) may illustrate the voltage waveform when the composite impedance of the driving unit is varied as described above. That is, from FIG. 11(b), in the case where the composite gate resistance (R_{g(off)}) is adjusted to 2Ω in the switching transient section and the composite gate resistance (R_{g_l}) is adjusted to 30Ω in the diode reflux start section after the drain-source voltage decreases, it can be seen that ringing phenomenon and the formation of negative voltage is minimized.

The above description is merely an illustrative description of the technical idea of the present disclosure, and those skilled in the art may make various modifications and variations without departing from the essential characteristics of the present disclosure.

Accordingly, the embodiments disclosed in the present disclosure are not intended to limit the technical idea of the present disclosure but are for explanation, and the scope of the technical idea of the present disclosure is not limited by these embodiments.

The scope of protection of this disclosure should be interpreted in accordance with the claims below, and all technical ideas within the equivalent scope should be interpreted as being included in the scope of rights of this disclosure.

## Claims

1. An induction heating type cooktop comprising:
a top glass on which a cooking vessel is placed;
a working coil configured to generate a magnetic field for heating the cooking vessel; and
an inverter including:
at least one switching element configured to be driven to flow current to the working coil, and
a driving unit configured to drive the switching element,
wherein the composite impedance of the driver is variable.

2. The induction heating type cooktop of claim 1, wherein the driving part is configured to:
reduce the composite impedance in the switching transient section of the switching element, and
increase the composite impedance when the drain-source voltage of the switching element falls and returns to the diode.

3. The induction heating type cooktop of claim 1, wherein the driving part includes first to third impedance forming units for adjusting the composite impedance of the driving unit.

4. The induction heating type cooktop of claim 3, wherein the third composite impedance formed by the third impedance forming unit is greater than the first composite impedance formed by the first impedance forming unit, and
wherein the first composite impedance is greater than the second composite impedance formed by the second impedance forming unit.

5. The induction heating type cooktop of claim 3, wherein the first impedance forming unit includes:
a first gate resistor,
a first switch configured to selectively connect the first gate resistance to a gate internal resistance of the switching element, and
a first switch power supply unit configured to control the first switch to operate.

6. The induction heating type cooktop of claim 5, wherein the second impedance forming unit includes a second gate resistor, and
wherein the first gate resistance is smaller than the second gate resistance.

7. The induction heating type cooktop of claim 3, wherein the third impedance forming unit includes:
a second diode connected to the gate internal resistance of the switching element,
a second switch connected to the second diode, and
a second switch power unit configured to control the second switch to operate.

8. The induction heating type cooktop of claim 3, wherein, when the gate of the switching element is turned off, the first impedance forming unit is configured to form the composite impedance.

9. The induction heating type cooktop of claim 3, wherein the third impedance forming unit is configured to form the composite impedance in a switching transient section of the switching element.

10. The induction heating type cooktop of claim 3, wherein, when the drain-source voltage of the switching element falls and returns to the diode, the second impedance forming unit is configured to form the composite impedance.
